# EUROPEAN PATENT APPLICATION

(11) **EP 1 865 416 A2**
(43) Date of publication of application: **12.12.2007**
(21) Application number: 07103488.8
(22) Date of filing: 05.03.2007
(51) Int. Cl.: G06F 13/38

(54) **Method and apparatus for connecting a wireless device with one or more host devices**

(30) Priority: 05.06.2006 KR 20060050457
(71) Applicant: Samsung Electronics Co., Ltd., Yeongtong-gu Suwon-si, Gyeonggi-do (KR)
(72) Inventor: Yun, Tae-jung 501 Maebong Samsung Apt., Seoul (KR)
(74) Representative: Clark, Charles Robert

(57) **Abstract**

A wireless connection method and system to connect between a single wireless device and a plurality of hosts. The method and system may use a wireless universal serial bus (USB) through which the single wireless device is able to connect to the plurality of hosts depending on the presence of jobs so that efficiency and convenience of use of the wireless device is improved. The method of managing a wireless connection between the single wireless device and the plurality of hosts may include sending a signal from each of the plurality of hosts that have produced the signals such that the signal indicates if a particular host has a job to be executed by the single wireless device, the single wireless device receiving the signals from each of the plurality of host and identifying which particular host has the job to be executed by the single wireless device, establishing a wireless connection between the single wireless device and the particular host that has the job to be executed when the single wireless device identifies which particular host requests a job, and the single wireless device executing the job sent from the particular host when the single wireless device is connected to the particular host that requested the job.

## Description

The present invention relates to a method, apparatus and system for connecting a wireless device with one or more host devices. In particular, but not exclusively, the present invention is directed to management of a connection between a single wireless device and a plurality of hosts using a wireless universal serial bus (USB). More particularly, the present invention is directed to a method, apparatus and system to manage a connection between a single wireless device and a plurality of hosts using a wireless USB through which the single wireless device is able to connect to the plurality of hosts depending on the presence of jobs to be executed.

Recent trends in personal area network (PAN) technologies have been shifting away from wired technology towards wireless technology. Since the shift from wired technology is in progress, a universal serial bus (USB) is redefined as a wireless USB using the ultra wideband (UWB) range. The UWB-based wireless USB technology retains the maximum speed of 480 Mbps, which is one of the benefits of the existing USB 2.0 model, and enforces the current infrastructure so as to provide users with the same ease of use as the existing USB 2.0 model. However, when the wireless USB tries to meet the specifications of the existing USB 2.0 model, some beneficial aspects of the UWB-based wireless technology may be lost. A technology using the existing wireless USB technology is specified in U.S. Patent No. 5,890,015.

The conventional topology used for the wireless USB is a hub and spoke model that is well-known to one skilled in the art. Accordingly, a host acts as a hub in the center of a network and individual wireless devices act as spokes at the ends of the network. The host can be connected to up to many wireless devices (typically as many as 127 devices) since physical ports and wired connections are not necessary.

The above described hub and spoke topology does not consider the case where a single wireless device is connected to a plurality of hosts. Specifically, since the hub and spoke topology used for the existing wireless USB is not designed for the plurality of hosts sharing a particular wireless device, users can have difficulties in sharing the particular wireless device with the plurality of hosts. For example, when there are a plurality of hosts and a single wireless device (for instance, several computers sharing a single printer), a user connects and disconnects between the wireless device and the plurality of hosts (e.g., a particular user host computer among the plurality of hosts) with a similar level of effort as connecting a cable to a wired USB.

US2005-0027918 discloses a method of making a wireless connection between slave adapters connected to individual hosts and master adapters or splitters connected to peripheral devices. In this document, the master adapters or splitters detect the slave adapters and establish a wireless connection with the slave adapters in an inquiry mode. As such, the mode of the master adapters or splitters changes automatically into an operational mode and the master adapters perform communication according to a wireless protocol. After completing the operation, the master adapters are disconnected from the slave adapters.

However, the method described above employs slave adapters or splitters as additional hardware devices for wireless connection between the plurality of hosts and the peripheral devices, thereby resulting in a complicated structure that requires additional costs.

It is an aim of the present invention to improve the efficiency and/or convenience of use of a wireless device.

In broad terms, the present invention provides a method of managing a connection between a single wireless device and a plurality of hosts using a wireless universal serial bus (USB) through which the single wireless device is able to connect to the plurality of hosts depending on the presence of jobs to be executed so that efficiency and/or convenience of use of the wireless device is improved. Furthermore, the present invention provides a connection system to connect a single wireless device to a plurality of hosts. The system may use a wireless USB through which the single wireless device is able to connect to the plurality of hosts depending on the presence of jobs to be executed so that the efficiency and/or convenience of use of the wireless device may be improved.

The foregoing and/or other aspects and utilities of the present general inventive concept are achieved by providing a wireless connection method to manage a wireless connection between a single wireless device and a plurality of hosts, the method including sending a signal from each of the plurality of hosts to the single wireless device such that the signal indicates if a particular host has a job to be executed by the single wireless device, the single wireless device receiving the signals from each of the plurality of hosts and identifying which particular host has the job to be executed by the single wireless device, establishing a wireless connection between the single wireless device and the particular host that has the job to be executed, and executing the job sent from the particular host connecting to the single wireless device.

An association that has been defined in wireless USB topology specification may be executed between the single wireless device and each of the plurality of hosts in order to establish the wireless connection between the single wireless device and the plurality of hosts.

A notification signal may be sent from the single wireless device to the particular host requesting to execute the job when the single wireless device identifies which particular host has requested the job.

A 4-way handshake may be executed between the particular host and the single wireless device when the particular host requesting the job has received the notification signal from the wireless device.

A status signal may be sent from the single wireless device to check if the particular host has another job to be executed by the single wireless device when the single wireless device has completed the job sent from the particular host. Either a waiting request signal for an additional job request by the particular host or a connection end request signal may be sent from the particular host depending on the presence of additional jobs when the particular host has received the status signal from the single wireless device to check if there is another job request from the particular host.

The wireless connection may be terminated between the wireless device and the particular host when the single wireless device has received the connection end request signal from the particular host.

After termination, the signals from the plurality of hosts may be further scanned to determine if another host has another job to be executed by the single wireless device.

The foregoing and/or other aspects and utilities of the present general inventive concept may also be achieved by providing a wireless connection system to manage a wireless connection between a single wireless device and a plurality of hosts, the system including that each of the plurality of hosts has a host module to send a signal indicating if a particular host has a job to be executed by the single wireless device, and the single wireless device including a wireless device module to receive signals from the plurality of hosts and to check if each of the hosts has a job to be executed by the single wireless device, so that when the wireless module has identified the particular host which has a job to be executed, the wireless device module is able to establish a wireless connection between the single wireless device and the particular host that has the job to be executed, and when the wireless connection has been established between the single wireless device and the particular host, the wireless device module is able to control the wireless device in order to execute the job sent from the particular host.

The foregoing and/or other aspects and utilities of the present general inventive concept may also be achieved by providing a method of managing execution of pending jobs of a plurality of hosts by a shared wireless device, the method including detecting and identifying selective hosts among the plurality of hosts having the pending jobs, forming a wireless connection sequentially between the shared wireless device and each of the selective hosts to receive, and execute its pending jobs, and terminating the wireless connection with each selective host when its pending jobs are completed.

The foregoing and/or other aspects and utilities of the present general inventive concept may also be achieved by providing a method of managing execution of pending jobs of a plurality of hosts by a shared wireless device, the method including scanning signals from the plurality of hosts to detect a first pending job of a first particular host to be executed by the shared wireless device, identifying the first particular host if a first pending job is detected, forming a wireless connection between the shared wireless device and the first particular host to receive, execute and complete the first pending job from the first particular host, receiving, executing and completing the first pending job by the shared wireless device, detecting if the first particular host has additional pending jobs, further receiving, executing and completing each of the additional pending jobs by the shared wireless device, terminating the wireless connection with the first particular host, further scanning the signals from the plurality of hosts to detect a second pending job of a second particular host to be executed by the shared wireless device, and repeating each of the above steps with respect to a second pending job of a second particular host if the further scanning detected the second pending job of the second particular host.

The foregoing and/or other aspects and utilities of the present general inventive concept may also be achieved by providing a wireless connection system to manage execution of pending jobs of a plurality of hosts by a shared wireless device, the system including the plurality of hosts to send signals of pending jobs to the shared wireless device, and the shared wireless device to detect and identify selective hosts having pending jobs, to form a wireless connection with the selective hosts having the pending jobs and to terminate the wireless connection with each selective host when its pending jobs are completed.

The foregoing and/or other aspects and utilities of the present general inventive concept may also be achieved by providing a single wireless device including a wireless device module to identify among a plurality of hosts which host has one or more pending jobs to be executed by the single wireless device and to establish a wireless connection with the host having the one or more pending jobs to be executed and a wireless device controller to control the wireless device module to maintain the wireless connection with the host having the one or more pending jobs only during a time needed to execute the one or more pending jobs.

Embodiments of the present invention are now described by way of example with reference to the accompanying drawings of which:
Figure 1 illustrates a configuration diagram of a wireless connection system between a single wireless device and a plurality of hosts according an embodiment of the present general inventive concept;
Figures 2A, 2B and 2C illustrate configuration diagrams of hosts that may be employed in the wireless connection system illustrated in Figure 1, according to one or more embodiments of the present general inventive concept;
Figures 3A, 3B and 3C are configuration diagrams of single wireless devices that may be employed in the wireless connection system illustrated in Figure 1, according to one or more embodiments of the present general inventive concept;
Figure 4 is a flowchart illustrating a method of managing a wireless connection between the single wireless device and the plurality of hosts according to an embodiment of the present general inventive concept;
Figure 5, according to an embodiment of the present general inventive concept, is a flowchart illustrating an example where the method of managing the wireless connection may be performed using terms or abbreviations defined in a wireless universal serial bus (USB) topology specification;
Figure 6A is a flowchart illustrating procedures of the method of managing the wireless connection that may be performed in the hosts illustrated in Figure 5, according to an embodiment of the present general inventive concept and
Figure 6B is a flowchart illustrating procedures of the method of managing the wireless connection that maybe performed in the single wireless device illustrated in Figure 5, according to an embodiment of the present general inventive concept.

Reference will now be made in detail to the embodiments of the present general inventive concept, examples of which are illustrated in the accompanying drawings, wherein like reference numerals refer to the like elements throughout.

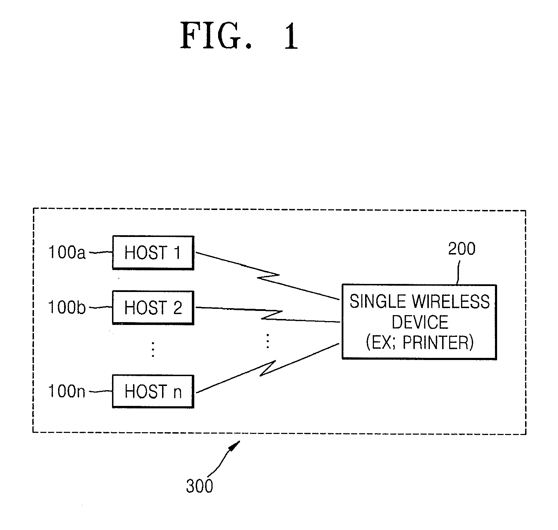

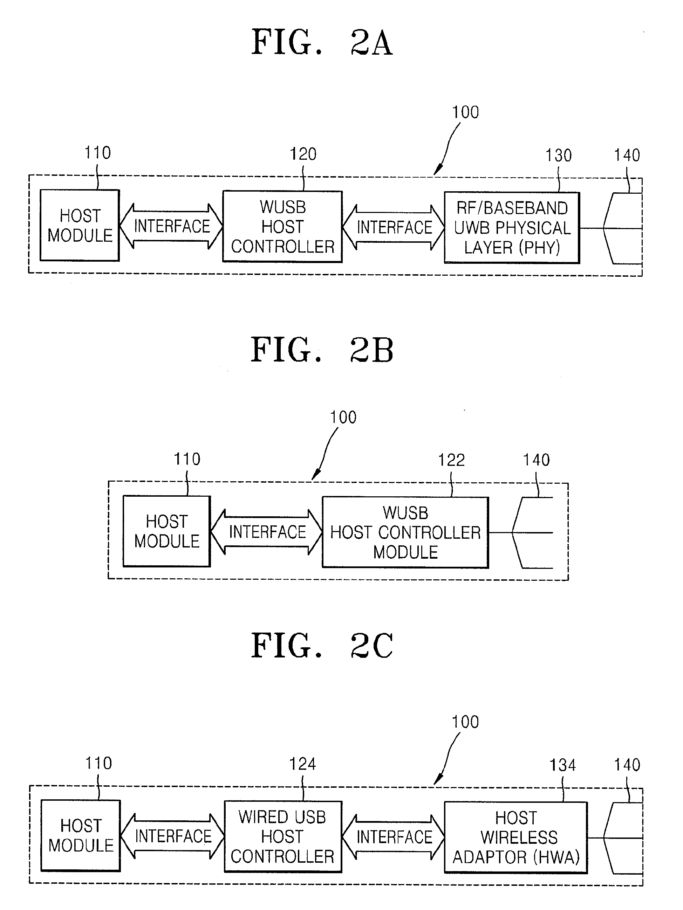

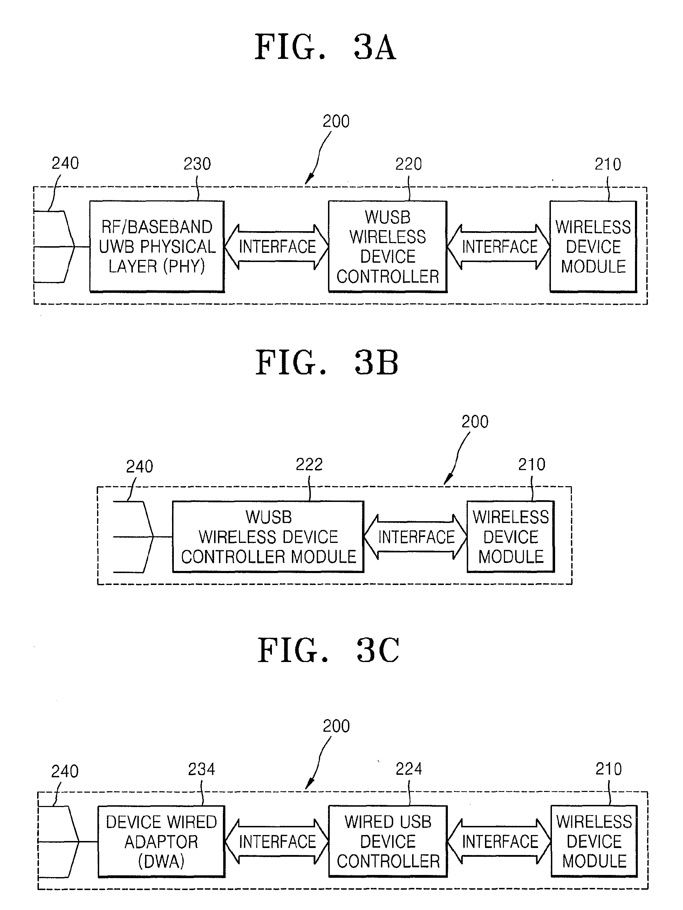

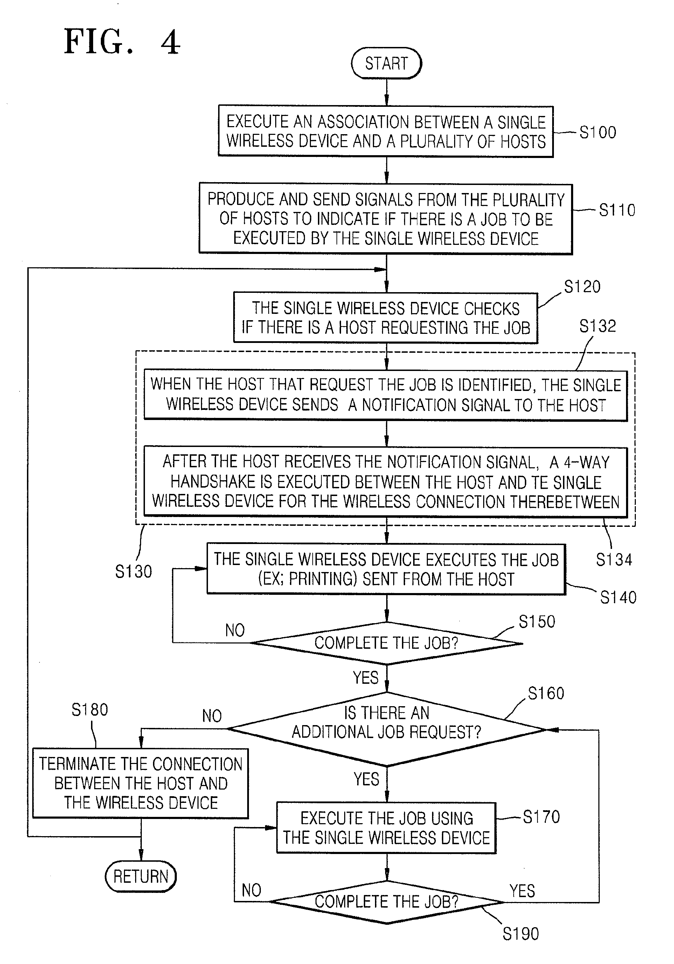

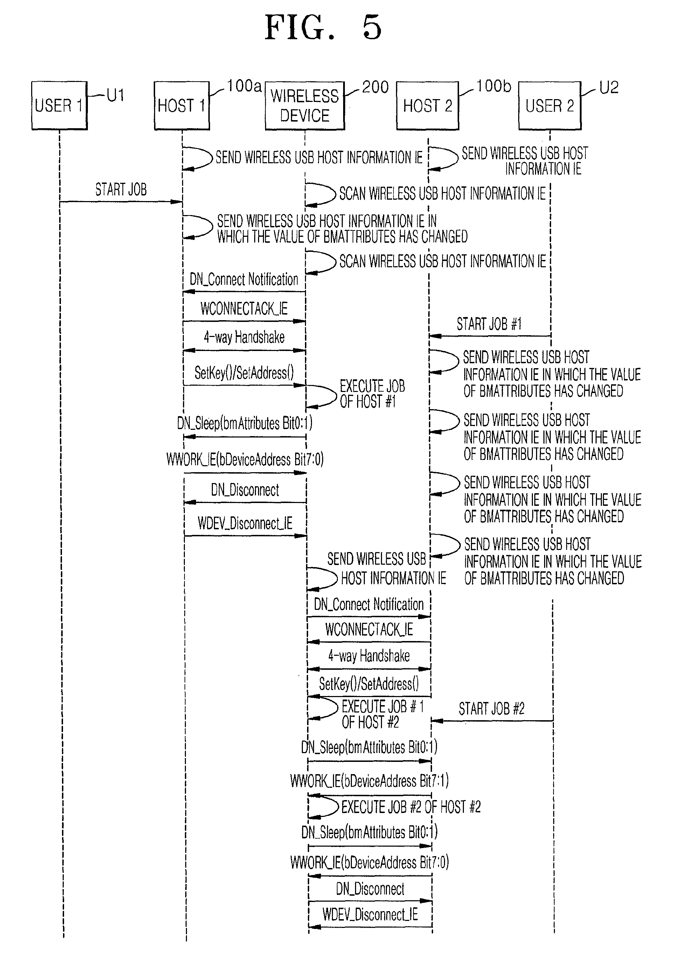

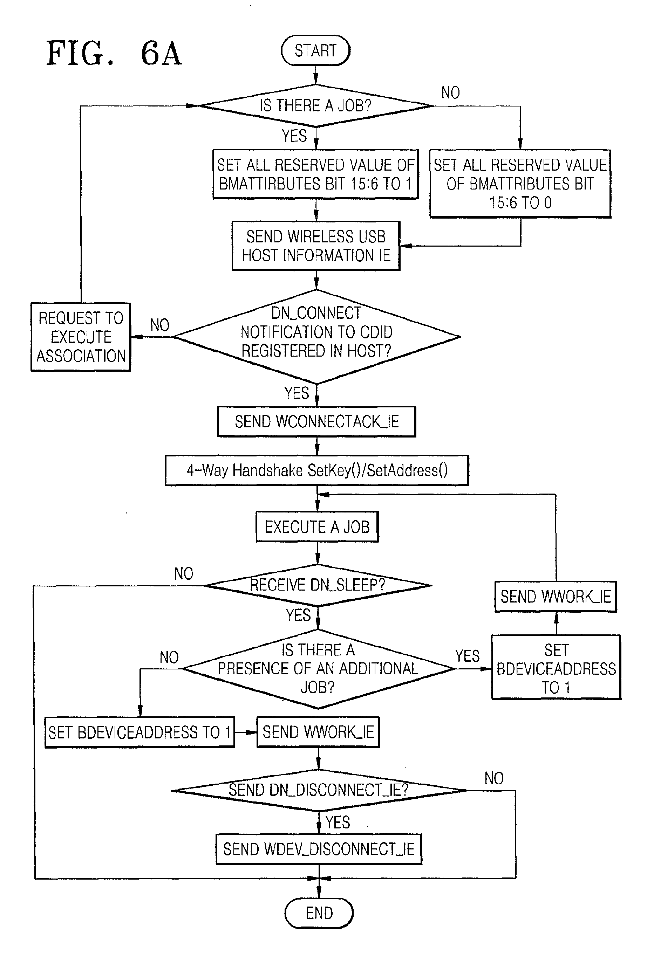

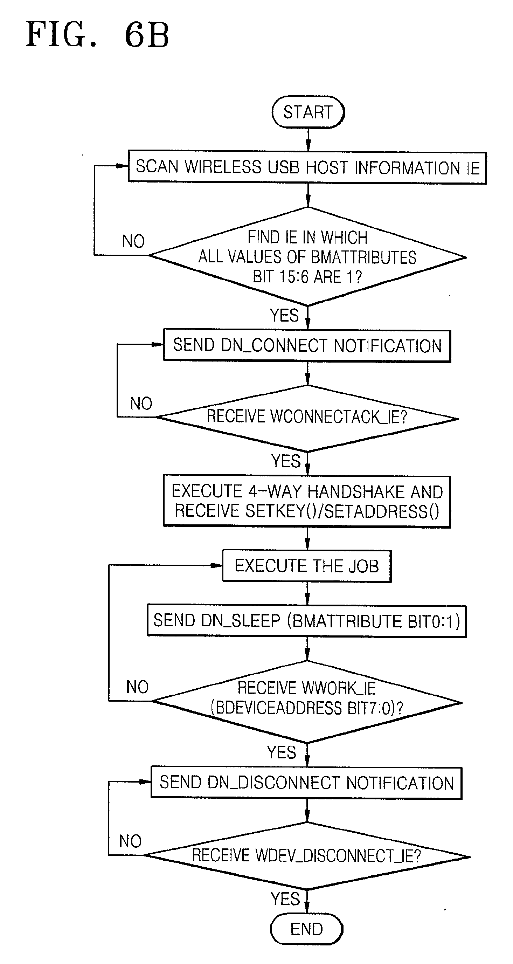

Figure 1 illustrates a configuration diagram of a wireless connection system 300 between a single wireless device 200 and a plurality of hosts 100a, 100b, through 100n according to an embodiment of the present general inventive concept. Figures 2A, 2B, and 2C are configuration diagrams illustrating hosts 100 which may be employed as various embodiments of the plurality of hosts 100a, 100b,... through 100n in the wireless connection system illustrated in Figure 1, according to one or more embodiments of the present general inventive concept. Also, Figures 3A, 3B, and 3C are configuration diagrams of single wireless devices 200 that may be employed in the wireless connection system illustrated in Figure 1, according to one or more embodiments of the present general inventive concept. Figure 4 is a flowchart illustrating a method of managing a wireless connection (wireless method or wireless connection method) between the single wireless device 200 and the plurality of hosts 100a, 100b,... through 100n, according to an embodiment of the present general inventive concept. Figure 5, according to an embodiment of the present general inventive concept, is a flowchart illustrating an example where the wireless connection method maybe performed using terms or abbreviations defined in a wireless universal serial bus (USB) (WUSB) topology specification. Figure 6A is a flowchart illustrating procedures of the wireless method that may be performed in the hosts 100 illustrated in Figure 5, and Figure 6B is a flowchart illustrating procedures of the wireless method that may be performed in the single wireless device 200 illustrated in Figure 5, according to one or more embodiments of the present general inventive concept.

Referring to Figures 1, 2A, 2B, 2C, 3A, 3B, and 3C, in the wireless connection system 300 including the single wireless device 200 and the plurality of hosts 100a, 100b,... through 100n, each of the plurality of hosts may include a host module 110 (Figure 2A through 2C) which is used to produce and to send signals indicating if there is a job, such as a printing job, that is to be performed (or executed) by the single wireless device 200. The single wireless device 200 may include a wireless device module 210 (Figure 3A through 3C) that identifies the host 100 that has the job that is to be performed (or executed) by the wireless device 200 and to check each signal sent from the plurality of hosts 100. When the wireless module 210 determines that a particular host 100 has a job to be executed by the single wireless device 200, the wireless module 210 can establish a wireless connection between the single wireless device 200 and the particular host 100 and can enable the single wireless device 200 to execute the job sent from the particular host 100 after making the wireless connection between the single wireless device 200 and the particular host 100.

As illustrated in Figure 2A, the host 100 may include the host module 110, a wireless USB (WUSB) host controller 120, an RF/baseband ultra wideband (UWB) physical layer 130, and an antenna 140. Alternatively, the host 100 may include the host module 110, a WUSB host controller module 122, and an antenna 140 as illustrated in Figure 2B, or include host module 110, a wired USB host controller 124, a host wireless adaptor (HWA) 134, and an antenna 140 as illustrated in Figure 2C. The WUSB host controller module 122, as illustrated in Figure 2B, may be formed by combining the WUSB host controller 120 and the RF/baseband UWB physical layer 130 of the host 100 of Figure 2A. The foregoing components may be interfaced to one another as illustrated in Figures 2A, 2B, and 2C.

As illustrated in Figure 3A, the single wireless device 200 (e.g., a wireless printer), may include the wireless device module 210, a WUSB wireless device controller 220, an RF/baseband UWB physical layer (PHY) 230, and an antenna 240. Alternatively, the single wireless device 200 may include the wireless device module 210, a WUSB wireless device controller module 222, and the antenna 240 as illustrated in Figure 3B, or include the wireless device module 210, a wired USB device controller 224, a device wire adaptor (DWA) 234 and the antenna 240 as illustrated in Figure 3C.
The WUSB wireless device controller module 222 illustrated in Figure 3B may be formed by combining the WUSB wireless device controller 220 and the RF/baseband UWB PHY 230 of the single wireless device 200 illustrated in Figure 3A. The wireless device controller can be used to control the wireless device module to maintain a wireless connection with only those hosts that have a pending job (or jobs) only during a time needed to execute the one or more pending jobs. Also, the foregoing components may be interfaced to one another as illustrated in Figures 3A, 3B, and 3C.

In Figure 1, the hosts 100a, 100b,..., through 100n may be any of the hosts 100 illustrated in Figures 2A through 2C, and the single wireless device 200 may be any one of the single wireless devices 200 illustrated in Figures 3A through 3C. Moreover, the host module 110 of the host 100 may include a non-volatile memory (not illustrated) to store a code that can control the WUSB host controller 120 (Figure 2A), the wired USB host controller 124 (Figure 2C) and/or the WUSB host controller module 122 (Figure 2B) and the connection context required to make a wireless USB connection, and may include a volatile memory (not illustrated) required to execute the code operation. The wireless device module 210 may include a non-volatile memory (not illustrated) to store a code that can control the WUSB wireless device controller 220 (Figure 3A) or the wired USB device controller 224 (Figure 3C) or the WUSB wireless device controller module 222 (Figure 3B) and the connection context required to make a wireless USB connection, and may include a volatile memory (not illustrated) required to execute the code operation.

According to one or more embodiments of the present general inventive concept, packets sent from the antennas 140 (Figures 2A through 2C) and 240 (Figures 3A through 3C) may be formed of well-known media access control layers which may include beacons and a distributed reservation protocol.

Referring to Figure 4, in the wireless connection method between the single wireless device 200 and the plurality of hosts 100, according to an embodiment of the present general inventive concept, the single wireless device 200 may first be associated with each of the hosts 100a, 100b, ... though 100n according to the USB topology specification in order to establish a wireless connection with the hosts 100a, 100b, ... through 100n (operation S100).

The terms to be used in connection with one or more embodiments of the present general inventive concept, may be defined in the wireless USB topology specification.

While the single wireless device 200 is associated with the hosts 100a, 100b,... through 100n, a connection context including connection host IDs, a connection device ID, and a connection key may be stored in the non-volatile memory (not illustrated) in each of the hosts 100a, 100b,... through 100n or in the single wireless device 200.

After the single wireless device 200 has been associated with the plurality of hosts 100a, 100b,... and 100n, each of the plurality of hosts 100a, 100b,... and 100n is used to produce and to transmit signals indicating if there is a job to be performed by the single wireless device 200 (operation S110).

The single wireless device 200 may be used to identify the particular host 100 that has a job (e.g., printing) to be performed by the single wireless device 200 and to check the signals sent from the plurality of hosts 100a, 100b,..., through 100n (operation S120).

When the particular host 100 identifies that a job has to be performed by the single wireless device 200, the wireless connection between the single wireless device 200 and the particular host 100 is established (operation S130). For facilitating explanation, the particular host 100 having a job to be performed by the single wireless device 200 is designated as host 100a.

When the single wireless device 200 identifies (or has identified) which particular host 100 is requesting (or has requested) the job to be performed in operation S130, the single wireless device 200 sends a notification signal to the particular host 100a (operation S132), and a 4-way handshake is executed between the particular host 100a and the single wireless device 200 when the particular host 100a receives (or in response to receipt of) the notification signal (operation S134). In this manner, the wireless connection between the particular host 100a and the single wireless device 200 maybe established (operation S134).

When the wireless connection is established between the single wireless device 200 and the particular host 100a, the single wireless device 200 performs/executes the job sent from the particular host 100a (operation S140). When the single wireless device 200 has completed the job sent from the particular host 100a or determined that the job has been completed (operation S150), the single wireless device 200 checks whether there is another job requested by the particular host 100a (operation S160), and, if there is another job requested, the single wireless device 200 executes the job (operation S170), (and then repeats these operations if another job is requested) or otherwise, terminates the wireless connection with the particular host 100a (operation S180). After the single wireless device 200 completes the job in operation S170, the single wireless device 200 checks if the particular host 100a has another job to be executed, and if so, repeats the same operations.

When the wireless connection between the single wireless device 200 and the particular host 100a is terminated in operation S180 (for example, after determining that all jobs from the particular host 100a have been completed), the above-noted procedures are directed to return to operation S120, and the subsequent procedures (S130, S140, S150, S160, S170, S190, S180 and then - back to S120 - or - back to the START from RETURN if the association in S100 needs to be re-executed - or- back to S110 if the association in S100 does not need to be re-executed but S110 needs to be re-executed) are repeated such that the wireless connection is established between the single wireless device 200 and the plurality of hosts 100a, 100b,..., through 100n. The foregoing procedure maybe repeated as many times as needed so that the efficiency of the communication between the plurality of hosts and the single wireless device needed to have the single wireless device execute the job (or jobs) sent to it by one or more of the plurality of hosts may be improved.

Referring to the embodiments of the present general inventive concept shown in Figures 5, 6A and 6B, the actual procedures of the wireless connection method and system to manage a connection between the single wireless device and the plurality of hosts will be described below using the same technical terms that were defined in the wireless USB topology specification.

In Figure 5, for facilitating the explanation, two hosts 100a and 100b are designated to share a single wireless device 200. An association is executed between the single wireless device 200 and the hosts 100a and 100b before the wireless connection is established. Each of the single wireless device 200 and the hosts 100a and 100b may store a connection context including a connection host ID, a connection device ID, and connection key in its non-volatile memory (not illustrated). The explanation below is provided beginning at the point where the single wireless device 200 is not connected to the wireless state diagram.

The hosts 100a or 100b that do not have jobs to execute by the single wireless device 200 set a bit15:6 section to 0. The bit15:6 section has been reserved in bmAttributes that is two bites of wireless host information IE, which is the last element of a micro-scheduled command (MMC). The wireless host information IE is sent to the single wireless device 200 according to the wireless USB specifications. When a user requests a desired job from the particular host 100a, the host 100a changes the value of the bmAttributes to another value other than 0 and sends the value of the bmAttributes to the single wireless device 200. When the single wireless device 200 determines that the bmAttributes have a value that is not 0 while scanning the wireless host information IE, the single wireless device 200 compares the value with a channel ID (CHID) stored in the single wireless device 200, and then sends a DN_Connect Notification to the particular host 100a in a device notification time slot (DNTS) allocated by the particular host 100a. The particular host 100a establishes connect acknowledge IE included in the next MMC and executes a 4-way handshake for authentication. Afterwards, the single wireless device 200 starts to perform (or execute) the actual job of the host 100a, and when the job is no longer executed for a trust time out (such as when the job has been completed), the single wireless device 200 sets the 0 bit of the bmAttributes to 1 during DN_Sleep in the allocated DNTS such that the set bit of the bmAttributes can be used for checking if the particular host 100a has another job that is to be executed by the single wireless device 200. The particular host 100a sets a work pending bit of the bDeviceAddress bit7 in the wireless USB work IE depending on whether there is another job that particular host 100a needs to execute. When the work pending bit of the bDeviceAddress bit7 is 1, the single wireless device 200 waits for the next job or executes the job while maintaining the connection, and when there is no further job pending, during the DNTS, the single wireless device 200 sends DN_Disconnect and stops sending the DN_Disconnect when the single wireless device 200 receives wireless USB device disconnect IE of the particular host 100a.

Moreover, in Figure 5, when the user U2 requests a desired job from the host 100b while the single wireless device 200 is executing the job of the particular host 100a, the host 100b changes a value of the bmAttributes to a value other than 0, and sends wireless host information IE. However, at this time, since the single wireless device 200 is executing the job of the particular host 100a, the single wireless device 200 does not scan the wireless host information IE sent from the host 100b. When the single wireless device 200 completes the job of the host 100a and terminates the connection between the particular host 100a, the single wireless device 200 scans the wireless host information IE in order to check if there is a job requested by the other host 100b. When the single wireless device 200 finds the wireless host information IE of the host 100b in which the value of the bmAttributes is not 0, the single wireless device 200 performs the same operations as done for the particular host 100a.

Consequently, according to one or more embodiments of the present general inventive concept, the wireless connection is automatically established between the plurality of hosts and the single wireless device needed to execute the pending jobs of the various hosts in a more efficient manner.

As described above, a wireless connection method and system between a single wireless device and plurality of hosts enable the single wireless device to connect with the plurality of hosts depending on the presence of jobs, and thus improve the efficiency of the wireless device and convenience of use of the wireless device. The wireless connection method and system can be operated without the need for slave adapters, master adapters and/or master splitters referenced in US2005-0027918.

Although a few embodiments of the present general inventive concept have been shown and described, it will be appreciated by those skilled in the art that changes may be made in these embodiments without departing from the principles of the general inventive concept, the scope of which is defined in the appended claims.

## Claims

1. A method of controlling a connection between a wireless device and a plurality of host devices, the method comprising:
sending a signal from at least one of the plurality of host devices, the signal being arranged so as to indicate whether a particular host has a job to be executed by the wireless device;
receiving at the wireless device the signal from the at least one of the plurality of host devices and identifying which host requests a job is executed by the wireless device;
establishing a wireless connection between the wireless device and the host requesting the job; and
executing the job sent from the connected host.

2. The method of claim 1, further comprising:
executing an association that has been defined by a wireless USB topology specification between the wireless device and at least one of the plurality of hosts in order to establish the wireless connection between the wireless device and the hosts.

3. The method of claim 1 or 2, further comprising:
sending a notification signal from the wireless device to the particular host requesting execution of the job after the wireless device has completed the identifying step of identifying which particular host has requested the job.

4. The method of claim 3, further comprising:
executing a 4-way handshake between the particular host and the wireless device when the particular host requesting the job has received the notification signal from the wireless device.

5. The method of claim 1, 2, 3 or 4, further comprising:
sending a status signal from the wireless device to check if the particular host has another job to be executed by the wireless device when the single wireless device has completed the job sent from the particular host.

6. The method of claim 5, further comprising, depending on the presence of additional jobs when the particular host has received the status signal from the wireless device to check if the particular host has another job to be executed by the wireless device, either
sending a waiting request signal from the particular host for an additional job request by the particular host, or
sending a connection end request signal from the particular host.

7. The method of claim 6, further comprising:
terminating the wireless connection between the wireless device and the particular host when the wireless device has received the connection end request signal from the host.

8. The method of claim 1, 5, 6 or 7, further comprising:
scanning the signals from the plurality of hosts to determine whether another host has another job to be executed by the wireless device.

9. A method of managing execution of pending jobs of a plurality of hosts by a shared wireless device, the method comprising:
detecting and identifying selective hosts among the plurality of hosts having the pending jobs;
forming a wireless connection sequentially between the shared wireless device and each of the selective hosts to receive and execute the pending jobs; and
terminating the wireless connection with each selective host when the corresponding pending jobs are completed.

10. A method of managing execution of pending jobs of a plurality of hosts by a shared wireless device, the method comprising:
scanning signals from the plurality of hosts to detect a first pending job of a first particular host to be executed by the shared wireless device;
identifying the first particular host if a first pending job is detected;
forming a wireless connection between the shared wireless device and the first particular host to receive, execute and complete the first pending job from the first particular host;
receiving, executing and completing the first pending job by the shared wireless device;
detecting whether the first particular host has additional pending jobs; further receiving, executing and completing each of the additional pending jobs by the shared wireless device;
terminating the wireless connection with the first particular host; and
further scanning the signals from the plurality of hosts to detect a second pending job of a second particular host to be executed by the shared wireless device; and
repeating each of the above steps with respect to a second pending job of a second particular host if the further scanning detected the second pending job of the second particular host.

11. A wireless connection system to manage a wireless connection between a single wireless device and a plurality of hosts, the system comprising:
each of the plurality of hosts having a host module arranged to send a signal indicating if a particular host has a job to be executed by the single wireless device; and
the single wireless device having a wireless device module arranged to receive signals from the plurality of hosts and to check if each of the hosts has a job to be executed by the single wireless device,
wherein the wireless device module is arranged to establish a wireless connection between the single wireless device and the particular host that has the job to be executed when the wireless device module has identified the particular host which has a job to be executed, and
the wireless device module is arranged to control the wireless device in order to execute the job sent from the particular host when the wireless connection is established.

12. The wireless connection system of claim 11, wherein the system is aranged to form an association defined by a wireless USB topology specification between the wireless device and each of the plurality of hosts so as to establish the wireless connection between the wireless device and at least one of the plurality of hosts.

13. The wireless connection system of claim 11 or 12, wherein the wireless device is arranged to send a notification signal to the particular host when the wireless device identifies which particular host requested a job to be executed.

14. The wireless connection system of claim 11, 12 or 13, wherein a 4-way handshake is executable between the host and the wireless device when the host requesting the job receives the notification signal from the wireless device.

15. The wireless connection system of claim 11, wherein the wireless device is arranged to send a status signal for checking if the particular host has another job to be executed by the wireless device when the wireless device has completed the job.

16. The wireless connection system of claim 15, wherein the host is arranged to send either a waiting request signal or a connection end request signal, depending on the presence of additional jobs, when the host has received the status signal from the wireless device.

17. The wireless connection system of claim 16, wherein the wireless device is arranged to terminate the connection with the particular host when the wireless device has received the connection end request signal from the particular host.

18. A wireless connection system to manage execution of pending jobs of at least one of a plurality of hosts by a shared wireless device, the system comprising:
the plurality of hosts arranged to send signals of pending jobs to the shared wireless device; and
the shared wireless device being arranged to
detect and identify selective hosts having pending jobs,
form a wireless connection with the selective hosts having the pending jobs, and
terminate the wireless connection with each selective host when its pending jobs are completed.

19. A wireless device, comprising:
a wireless device module arranged to identify among a plurality of hosts which host has one or more pending jobs to be executed by the wireless device and to establish a wireless connection with the host having the one or more pending jobs to be executed; and
a wireless device controller arranged to control the wireless device module to maintain the wireless connection with the host having the one or more pending jobs only during a time needed to execute the one or more pending jobs.
